# EUROPEAN PATENT SPECIFICATION

(11) **EP 2 882 670 B1**
(45) Date of publication and mention of the grant of the patent: **17.03.2021**
(21) Application number: 13733294.6
(22) Date of filing: 01.07.2013
(51) Int. Cl.: B65D 85/804, A47J 31/40

(54) **CAPSULE WITH IMPROVED SEALING ELEMENT, BEVERAGE PREPARATION SYSTEM AND PROCESS OF PREPARING A BEVERAGE**
KAPSEL MIT VERBESSERTEM DICHTUNGSELEMENT, SYSTEM ZUM GETRÄNKSVORBEREITUNG UND VERFAHREN ZUR HERSTELLUNG EINES GETRÄNKES
CAPSULE AVEC ÉLÉMENT D'ÉTANCHÉITÉ AMÉLIORÉ, SYSTÈME DE PRÉPARATION DE BOISSONS ET PROCÉDÉ DE PRÉPARATION D'UNE BOISSON

(30) Priority: 16.07.2012 EP 12005215
(43) Date of publication of application: 17.06.2015
(73) Proprietor: Tuttoespresso S.r.l., 20123 Milano (IT)
(72) Inventor: DOGLIONI MAJER, Luca, I-22010 Carate Urio (IT)
(74) Representative: Gislon, Gabriele
(86) International application number: PCT/EP2013/063858
(87) International publication number: WO 2014/012779

(56) References cited:
- EP-A1- 1 364 605
- EP-A1- 1 654 966
- EP-A1- 1 792 849
- WO-A1-2012/042487
- WO-A1-2012/137052
- WO-A1-2013/132435
- WO-A1-2013/136209
- WO-A2-2010/084475

## Description

### Technical field

The present invention relates to a capsule with a improved sealing element. More particularly, the invention relates to a single use, i.e. a disposable, capsule, or cartridge, for preparing beverage, such as coffee, from a dose of one or more products contained by the capsule, and to a beverage production system comprising a beverage production device (brewing device) for interacting with the capsule.

### Background of the invention

Beverage capsules, especially disposable capsule for preparing coffee, have been known from the 1930's. Beverage capsules comprise a container portion that houses a dose of at least one extractable or reconstitutable product, generally ground coffee, but also tea herbal extracts, instant i.e. powdered drinks and liquid concentrates. The capsules also comprise a portion that interacts with a brewing device to prepare the required beverage. The typical brewing device comprises water heating means, an enclosing member, or receptacle, intended to cooperate with the capsule to define a preparation chamber and a pump or similar means so that the brewing liquid, preferably hot water under pressure, can be supplied to the capsule for the extraction or reconstitution of the beverage from the dose of product contained therein.

In general, the brewing device includes a first part with a receptacle for housing at least part of the capsule and a second part that cooperates with the first part in the brewing of the beverage from the capsule, the first and/or second part are mobile to each other and the receptacle has one edge, usually positioned in the lower or upper terminal part of the second part, that enters into contact with the sealing element of the capsule to compress it against the second part of the brewing device for providing a seal tight engagement with the capsule during the beverage preparation process.

In a known beverage preparation process a capsule is fed into the receptacle of the brewing device and is injected with the brewing liquid, typically hot water. The injected hot water passes trough it and extracts the beverage from the ingredient enclosed therein. The beverage exits the capsule to reach a beverage collector and thence a cup or a container.

The receptacle encloses at least part of the capsule and cooperates with it in a seal tight engagement in order to allow the hot water to be inserted into the capsule to extract the beverage with no or with limited leakage. Leakage of the brewing liquid may negatively affect the extraction process of the beverage, thus the desired taste and quality of the beverage is not reached.

A known type of capsule has a substantially frusto-conical body and a rim flange portion extending from one of the two bases of the capsule. The brewing device comprises means to compress the receptacle against the flange so as to reach the required sealing during the brewing step. There are known capsules provided with a flange that is located in correspondence of the side of the capsule where the beverage outlet is located. The beverage leaves the capsule from the base where the flange is located. A sealing between the flange and the receptacle is requested to avoid water leaking from the receptacle.

In known brewing devices the seal tight engagement between the capsule and the receptacle is generally obtained by exerting a pressure on the rim flange; in other words, the receptacle which is cup-shaped in order to enclose the capsule, is pressed against the flange-like rim of the capsule, i.e. a rim extending from the lateral surface of the capsule, along its perimeter and against a receiving plate where means for piercing the capsule are located.

The problem exists of ensuring a seal tight engagement between the capsule and the receptacle of the brewing device. In fact, a leak of the brewing liquid outside the capsule can reduce the pressure inside the capsule and therefore reduce the extraction of the coffee flavours; in addition, water discharged to the drip-tray of the dispensing machine or even fed to the cup will be unpleasant to see. Should water reach the cup because of an inferior sealing quality and thus dilute the taste of the beverage extracted from the capsule, organoleptic characteristics and quality of the produced beverage will be affected.

Known capsules provided with a resilient material, acting as a sealing member, are not suitable to solve the above problem and other solutions have been proposed to ensure a satisfactory seal tight engagement between the capsule and a receptacle provided with irregularities. The sealing portion should ensure that the pressing portion of the receptacle does not remain stuck into the sealing portion of the capsule at the end of the brewing step, when the used capsule has to be removed from the receptacle (as it is often the case with rubber-like sealing elements).

Additionally, there is the problem of having a capsule that can be used with different types of known brewing machines: often one type of capsule cannot work, or works with difficulty, with different models of brewing machines. This is because in different types of machines, due to imprecise engineering or careful evaluation of the side effects of deliberate engineering choices, the length of the movement of the first and second parts is not exactly identical and therefore the sealing element may result to be too big in one machine (causing difficulty in closing the machine) or too small for the machine (causing a leakage of water). Also, in one same machine, repeated use may result in wear and tear causing slight changes of the travel distance of the first and second portions of the machine and possible leakages of water from the brewing chamber with time.

EP1654966 discloses capsules provided with a resilient material, acting as a gasket or sealing member, which is added in correspondence of the flange-like rim, in order to engage the pressing portion of the receptacle and to interact with the receptacle to provide the desired seal tight engagement.

WO 2009/115474 discloses a brewing device where the pressing portion of the receptacle, i.e. the edge of the receptacle which is brought into contact with the capsule, is provided with irregularities, indentations, and/or gaps. According to the description of WO'474, the gaps are obtained in the edge of the receptacle in order to provide it with a flow directing means to control leakage if the device is operated without inserting a capsule. Nevertheless using this device with certain capsules compatible with such receptacle, results in water leaks from the receptacle into the cup where coffee is being collected, providing a negative effect both visually and as far as taste is concerned, not to mention the possible drawback of rapidly filling with excess water the drip tray container.

Capsules are already known having one or more projecting elements, made of the same material of the capsule, and extending from its external surface, and in particular form its flange-like rim, in order to provide the sealing engagement with the receptacle.

WO2010/084475, in the name of Ethical Coffee Company, describes several embodiments of a capsule having projecting elements on its external surface, and in particular on the upper surface of the flange-like rim.

WO2010/137946, to Sara Lee, discloses a capsule having at least one projection for providing a sealing engagement with the receptacle. The proposed projecting elements disclosed in WO2010/084475 and WO2010/137946 are not suitable to solve the above mentioned problem of ensuring a satisfactory seal tight engagement between the capsule and a receptacle of different types of brewing machines. In fact, projecting portions of known capsules cause difficulty in closing the machine and/or leakage of water, depending on the machine where the capsule is used.

WO 2012/042487A1 discloses a capsule comprising a lid and a body defined by a side wall, by a bottom wall and by a circular crown to support the capsule body in the receptacle of the infusion machine. The lid is arranged inside the crown. This document discloses that he best sealing effect can be obtained if a sealing thickening of the circular crown is made at the sealing annular rib. Such a sealing thickening is distributed on both faces of the circular crown.

EP1792849 discloses a cartridge having water inlet means, a beverage forming chamber, beverage outlet means for discharging said beverage, a passage for said beverage flow located internally to said cartridge and blocking means for at least partially blocking said passage until a pressure is reached within the cartridge which acts on said blocking means to allow the outflow of the beverage through said passage. EP1364605 discloses a cartridge for soluble products, comprising a container, a lid, which is provided on anupper wall and is designed to be perforated for the introduction of hot water under pressure into the cartridge.

WO2013/132435 discloses a capsule comprising a cup-shaped body defined by a bottom wall, a side wall, a lid closing the body and a flange. An annular shoulder is provided on the inner face of the side wall of the capsule and on which a peripheral edge of the lid is fixed. The flange is provided with an annular projection extending towards the bottom wall of the capsule from said flange to provide an annular seat suited to be engaged by the upper end of a side wall of the percolation chamber.

WO2013/136209 discloses a capsule comprising a hollow body, an inlet wall, an outlet wall closing said capsule body, a lateral wal and a flange rim. A sealing element (annular tooth) is protruding from the upper surface of the flange rim. There is an empty space on the lower surface of the flange rim at the annular tooth towards the lid in order to promote the deformability of the annular tooth. The lid is adhered to the lower side of the flange rim except said empty space.

WO2012/137052 comprises an upper closing area on the upper surface of the flange rim. Said upper closing area is associated with an external annular edge and an internal annular edge, wherein a closing element (closing foil) is associated with said external annular edge. Said internal annular edge is provided with a plurality of projecting elements extending from said internal annular edge in the direction of said closing foil. During the preparation of a beverage the closing foil comes into contact with said projecting elements and, under the pressure of the first portion and the second portion of the apparatus, the foil is perforated to allow the outflow of the brewed beverage.

It is an aim of the present invention to solve the above problems and to provide a capsule that can be used with different shapes and profiles of the pressing portion of the receptacle, and with different closing mechanisms without affecting negatively the operation of the dispensing unit i.e. creating no problem while closing the machine or inserting/extracting the capsule into/from the receptacle.

Another aim of the present invention is to provide a capsule which is easy to produce and wherein the sealing element is made integral with the capsule body, without the need of adding resilient sealing material on its external surface for providing sealing compensation for the irregularities provided on the receptacle due to wear and tear, imprecise engineering or altogether different closing mechanisms.

### Summary of the invention

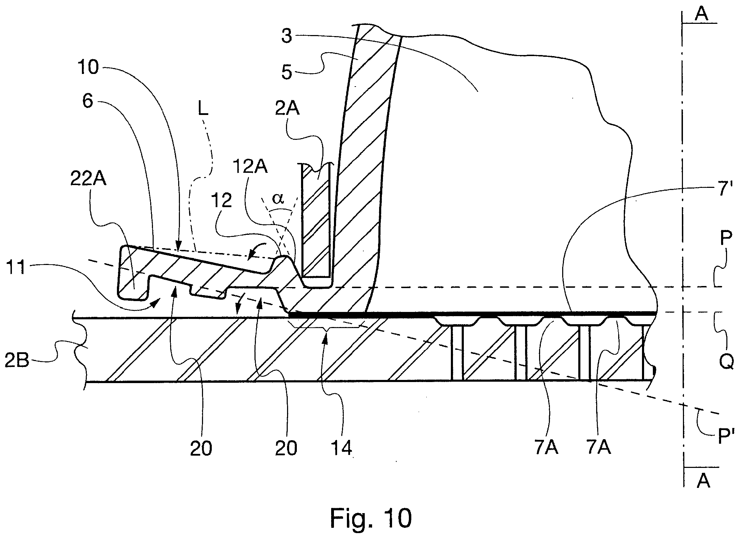

These and other aims are achieved by means of the capsule of the present invention, that is a disposable capsule for the preparation of a beverage from a dose of a product, according to claim 1. The capsule is insertable into a beverage production device (also called a dispensing unit, or brewing device) comprising a receptacle for enclosing at least part of the capsule. The capsule is provided with a lateral wall, an upper wall and a lower wall forming a hollow body where said product is contained. The capsule further comprises a flange-like rim having an upper side and a lower side, the flange laterally extending from the capsule, and at least one sealing element in the form of a protrusion or projection from the flange-like rim, or in the form of an increased thickness of the flange rim, for providing a seal tight engagement with the pressing portion of the receptacle of the beverage production device when in use, i.e. when the receptacle is pressed against the flange rim of the capsule, e.g. during the brewing step. Thus, the protruding portion is extending from the flange-like rim towards the receptacle. The capsule also comprises a lid that forms the outlet wall of the capsule and that is in part attached to the flange rim of the capsule body. According to the invention, the capsule comprises a hollow body including an inlet wall, a lateral wall and a flange rim, the rim has an upper side and a lower side and a sealing element is located on the upper side of the flange rim, the lower side of the flange comprises at least two portions that are at different levels with respect to the capsule axis (A-A) to provide a cavity on said lower side of the flange rim. In other words, the capsule comprises a hollow body including an inlet wall, a lateral wall and a flange rim, the rim has an upper side and a lower side and a sealing element is located on the upper side of the flange rim, the lower side of the flange comprises at least two portions that lie on two or more planes that are at different levels with respect to the capsule axis (A-A), i.e. the planes meet the said axis of the capsule at different levels. In greater detail, one of the planes, preferably including at least part of the sealing element area, is higher than the other plane, so as to provide a space to receive a portion of the flange rim when the sealing element is compressed during the brewing step by the brewing device. The planes may be parallel to each other or may be not parallel, i.e. they cross, as shown in fig. 10, here below discussed. More than one plane may be present and the cavity defined on the lower side of the flange may have a non-planar and/or irregular shape.

With "higher" it is meant that with respect to the capsule axis (A-A), one of the planes is closer to the inlet wall (the top wall in the figures) than the other plane(s) of the lower side of the flange rim. In general, in the following description and claims the words "lower" and "upper" or "higher", "downwards" and "upwards" are referred to the position of parts of the capsule with respect to the capsule axis A-A and the attached drawings, assuming that the inlet wall is located at the highest position of the capsule.

The space (i.e. a kind of cavity) under the flange rim preferably is located at least in part under at least part of the sealing element and preferably also in a portion adjacent to the sealing element; alternatively, the space or cavity is located only adjacent to the sealing element, on the opposite side of the flange rim, i.e. on the lower side of the flange.

The capsule is generally also comprising a lid to close the capsule body, said lid is extending along the flange rim to provide at least one layer of lid material under at least part of the flange rim. In an exemplary embodiment, the flange rim of the capsule body is vertically spaced from the layer formed by the lid at least in the area where the sealing element is located, so as to provide a space to receive a portion of the flange rim when the sealing element is compressed in the brewing device.

The lid is typically selected from a plastic lid and a foil element, but could be made of other materials; a typical foil element is comprising aluminium layer(s) coupled with plastic layers, or appropriate plastic or bio-plastic layers, either thermo-formed or thermo-injected, to provide sealing qualities, flexibility and gas barrier properties, including - at times - oxygen barrier properties.

In particular in the case of a plastic lid, flange and lid wall are usually welded together at a location that is between the edge of the flange rim and the sealing element. When the lid is made of a foil member, the foil can also be welded to a portion of the lower side of the capsule that is between the sealing element and the bottom part of the lateral wall of the capsule (included). In another embodiment, the foil is welded to the portion of the plane that is higher (i.e. closer to the inlet wall); in this case the difference in height, i.e. the distance between the two planes of the lower side of the flange rim, is still sufficient to allow a downwards movement of the corresponding portion of the flange when it is compressed by the brewing device.

A further object of the invention is a beverage preparation system according to claim 11. This system comprises a capsule according to the invention and a brewing device including a first part with a receptacle for housing at least part of the capsule and a second part that cooperates with the first part in the brewing of the beverage from said capsule; the first and/or second part are mobile, at least with respect to each other and the receptacle of the first part has a lower edge that enters into contact with the sealing element to compress it against the second part for providing a seal tight engagement with the capsule during the process of preparing a beverage from the ingredients in the capsule.

According to an exemplary embodiment, the space between the flange rim and the lid is extending from at least part of the sealing element to the wall of the capsule body. According to the invention, this space is connected to the inside of the capsule, e.g. by grooves.

In a preferred embodiment the sealing element has a cross-section that is in the shape of a triangle or of a truncated triangle, where the sides of said triangle are extending from the flange rim, directly or through the lateral wall of the capsule, i.e. the triangle is protruding from the flange in a substantially vertical way.

In other words, in this embodiment the sealing element comprises a portion having a substantially triangular cross-section with two sides lying on two straight lines that extend from said upper surface of the flange rim and preferably define an angle (α) within the range 35° - 120.

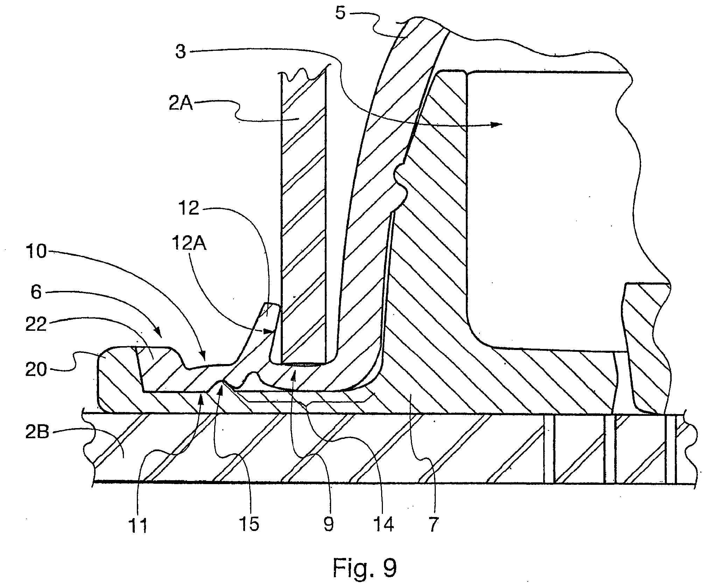

The distance of the sealing element from the lateral wall might be enough to allow the pressing element of the receptacle of the brewing device to be housed in the space between said lateral wall and said sealing element, as shown in fig. 9 and 10.

A lid for a capsule for preparing beverages is also disclosed, , said lid comprising a central portion that closes the hollow body of the capsule and a peripheral portion that cooperates with the flange rim of the capsule body, the lid comprises outlet means in the form of a plurality of self-perforating elements that are projecting outwardly from said lid and that are defined by grooves and in that said grooves form a pattern that includes a plurality of acute angles.

The self-perforating elements are breakable under the action of the mechanical force exerted by at least one part of the brewing device and/or by the force exerted by the water fed into the capsule.

In a preferred embodiment, the peripheral portion of the lid has an edge that extends vertically along the edge of the capsule flange rim to provide a more rigid assembly of lid and flange rim. In another embodiment, wherein the lid is made of a foil sealed to the flange rim of the capsule, the flange itself has a reinforcing ridge at its edge; the ridge can extend upwards (from the upper side of the flange towards the inlet wall) or downwards (from the lower side of the flange, away from the inlet wall of the capsule). Another object of the invention is a process, as per claim 12, of preparing a beverage from a capsule as above disclosed in the previously discussed brewing device, wherein said capsule comprising a hollow body including an inlet wall, a lateral wall and a flange rim, said flange rim having an upper side and a lower side and a sealing element located on the upper side of said flange rim, said brewing device comprising a first part and a second part mobile with respect to each other, wherein the sealing element is compressed and is moved by said first part towards the second part of the device together with a portion of the flange rim of the capsule.

The invention provides several advantages with respect to the prior art.

In fact, the space under the flange rim, namely the space under the sealing element or adjacent to it, provides a "spring" effect that results in an improved sealing of the capsule, that can therefore be used in different types or models of machines where the length of the movement of the first and second part - and therefore the distance between first and second part in a closed condition - is not, by design or coincidence, exactly identical.

Also, the spring effect can compensate for the changes in length of the movement of the mobile parts of the brewing machine that could occur as an effect of wear and tear. The invention will be further disclosed with reference to the enclosed drawings that refer to exemplary and non-limiting embodiments, wherein:
- fig. 1 is a perspective view of a capsule showing the lid;
- fig. 2 is a sectional schematic view of a capsule in a brewing device;
- fig.s 3a and 3b are an enlarged sectional view of a sealing area according to two alternative embodiments of the invention;
- figures 4 and 5 show an enlarged view of an exemplary embodiment of the invention;
- figures 6 and 7 show another exemplary embodiment of the invention;
- fig. 8 schematically shows a compressed condition of flange and sealing element,
- fig. 9 shows a compressed condition of another exemplary embodiment of the invention;
- figures 10 and 11 are sections of details of other embodiments not according to the invention.

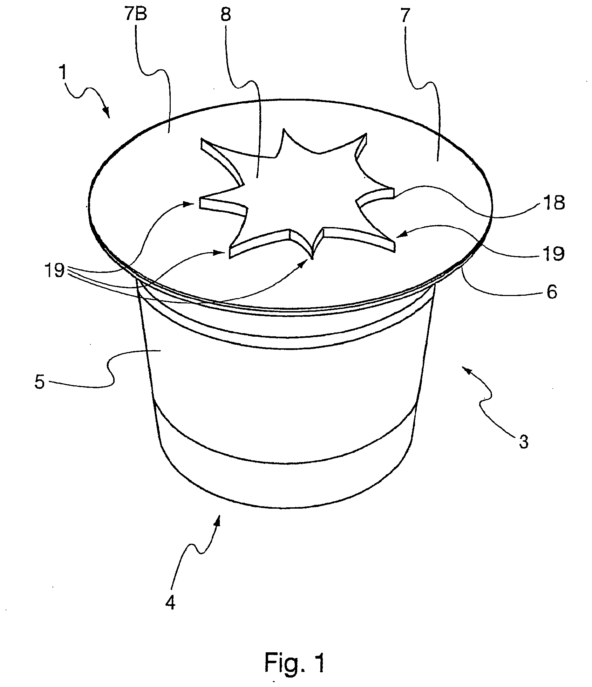

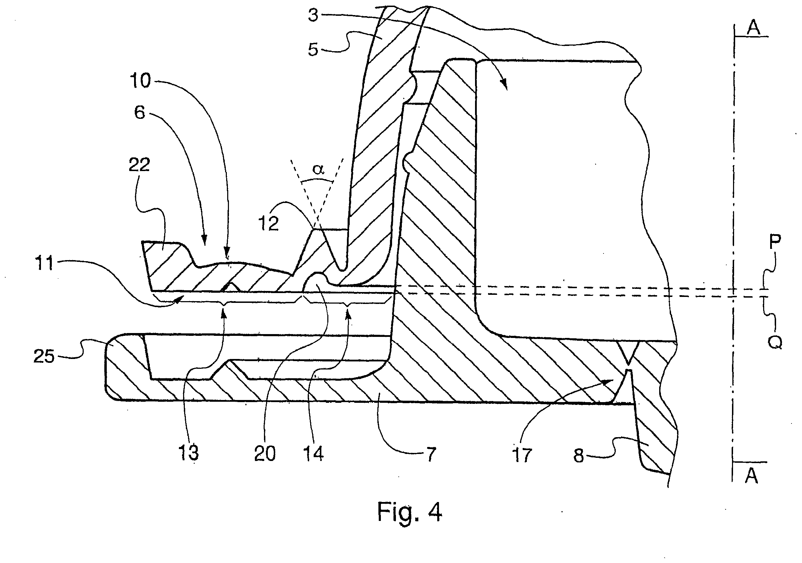

As visible in fig.1, a capsule 1 for beverage preparation is comprising a hollow body 3 including an inlet wall 4, a lateral wall 5 and a flange rim 6. In fig. 1 is shown an outlet wall 7 that is a lid, for instance in molded thermo-plastics or thermo-formed laminate, having a self-piercing portion 8; other types of outlet walls are also possible, such as e.g. a foil 7' that can be perforated or that can be ruptured or torn, or a preperforated foil, and other types of walls available to the skilled in the art. The capsule is to be used with a brewing device that can feed water to the capsule through the inlet wall 4 and retrieve the beverage from outlet wall 7. The flange rim 6 has (fig. 4-9) an upper side 10 and a lower side 11 and a sealing element 12 located on the upper side 10 of said flange rim. The meaning of "upper" and "lower" was discussed above and refers to axis A-A and the position as shown in the figures.

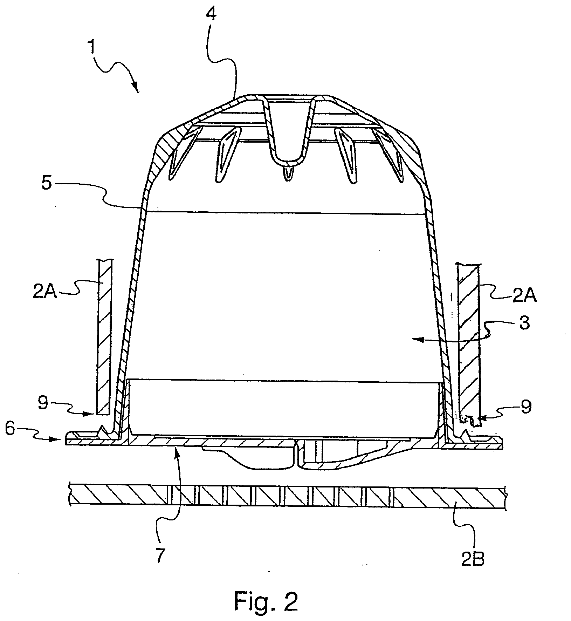

As visible in fig. 2, the capsule can be used in a brewing device that includes a first part 2A forming a receptacle for housing at least part of the capsule 1 and a second part 2B that cooperates with the first part in the brewing of the beverage from the capsule; the first and/or second part 2A, 2B are mobile with respect to each other, e.g. the part 2A is mobile and the part 2B is fixed, or viceversa. The receptacle, i.e. part 2A, has a lower edge, i.e. a pressing edge, 9 that enters into contact with the sealing element 12 (when from the position shown in fig. 2 the receptacle 2A is moved with respect to the part 2B of the brewing device, or vice versa) to compress it against the second part 2B for providing a seal tight engagement with the capsule during the beverage preparation process.

In fig. 2 are shown to possible shapes of pressing edge 9: on the left side the pressing edge is substantially flat and on the left side the pressing edge is provided with a groove that divides the pressing edge into two portions. Both these shapes are well known in the art.

The sealing element 12 can have different shapes, preferably it is formed by at least one, possibly also a plurality, protruding element(s) that is (are) circumferential to the capsule body; in the shown embodiment the sealing element 12 has a cross-section that is in the shape of a truncated triangle, the sides of said triangle extending from flange rim 6. The sealing element is spaced from lateral wall 5 of the capsule to provide a seat for element 2A.

More generally, the sealing element 12 comprises a portion having a substantially triangular cross-section with two sides lying on two straight lines that extend from the upper surface of the flange rim 6 and define an angle α (fig. 4) within the range 35° - 120, preferably of around 40-50°.

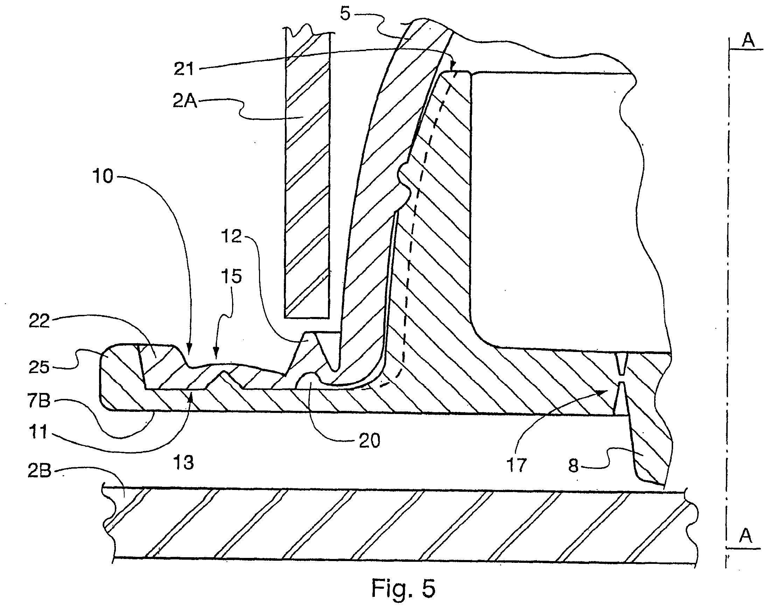

According to the invention as shown in particular in figs. 4 and 5, the lower side 11 of the flange 6 comprises at least two portions 13, 14 that lie on two or more planes that are at different levels with respect to the capsule axis (A-A; see figs. 4 and 5); in the embodiment shown, there are two portions that lie on two planes, P and Q; in greater detail, portion 13, lying on plane Q, extends from the edge of the flange 6 to the sealing element 12, excluded, while the portion 14, lying on plane P, extends from the sealing element 12 (included) to the lateral wall 5 of the capsule body 3. Planes P and Q are at different heights with respect to axis A-A of the capsule, i.e. they meet the axis A-A at different points.

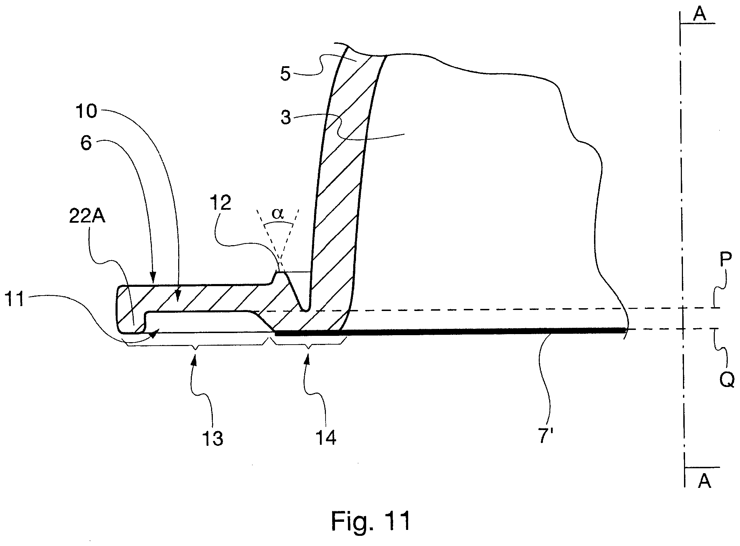

In an exemplary embodiment, the upper side of the flange is preferably in a single plane, i.e. portions of flange 6 on either side of the sealing element 12 are preferably coplanar. In another embodiment, see figures 10 and 11, the lower side 11 of flange 6 has portions that are on planes at different levels and possibly also at different inclinations with respect to axis A-A.

As mentioned, the planes are at different levels with respect to axis A-A of the capsule and plane P is higher, i.e. it is closer to the inlet wall 4 of the capsule, and vice versa for plane Q, that is the lower plane (closer to outlet wall 7).

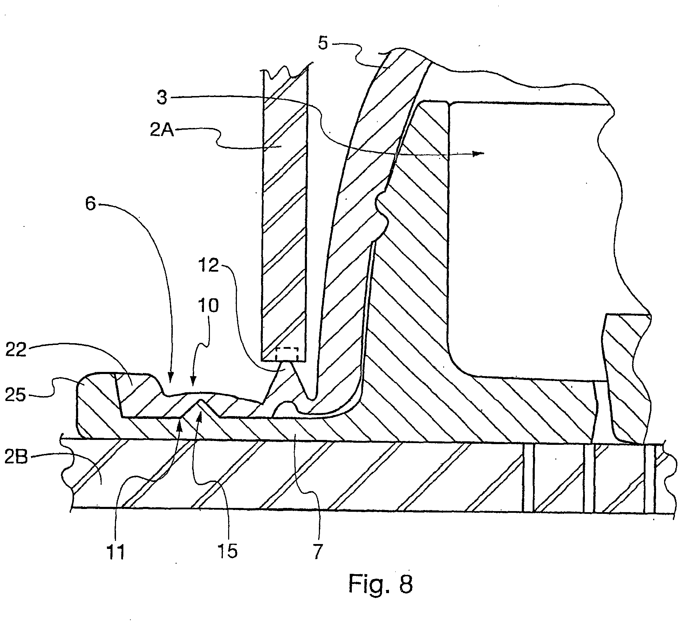

The result of having different planes is that the flange rim 6 of the capsule body is spaced from the layer formed by outlet wall 7 extending along flange rim 6, so as to provide a space, or cavity, 20 to receive a portion of the flange rim 6 when the sealing element 12 is compressed in the brewing device. Fig. 8 schematically shows a compressed condition of the flange 6 and the sealing element 12. Both are moved by edge 9 of receptacle 2A downwards, against the outer wall 7 and part 2B of the brewing device.

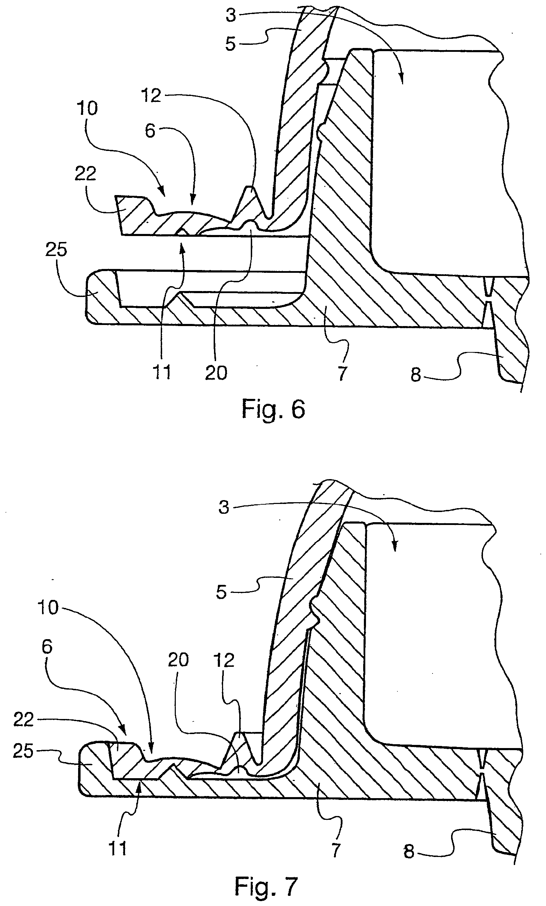

There can be several different configurations of the portions 13 and 14 and of the corresponding planes Q, P; in figures 5 to 7 are shown two similar embodiments in which the sealing element 12 is spaced from the outer wall and where the space 20 in one case stops at the sealing element 12 outer edge and in the other case continues towards the edge of the flange 6. The flange and the outlet wall 7 are preferably welded together at a location 15 (see figs. 5 and 8) that is between the edge of the flange rim 6 and the sealing element 12. In fig. 5 and 7 the flange 6 in correspondence of the welding position 15 has a thickness greater than in the rest of the flange, excluding the edge of the flange. The upper part of the flange rim has an embossed part, to provide roughly a continuous thickness despite the indent created on the lower side of the rim, to convey the energy provided by an ultra-sound sonotrode, in case of ultra sound welding of the lid.

In the shown embodiments, the spacing is provided on the lower side of the flange rim 6, but the same effect can be obtained with a spacing located in the upper side of the outlet wall, or with a combination of the two, on the lower side of the flange and on the upper side of the outlet wall. Clearly, although not directly relevant to the invention, also the indent for conveying the ultrasound energy can alternatively be placed with the female part on the lower side of the rim, as well as on the upper side of the lid.

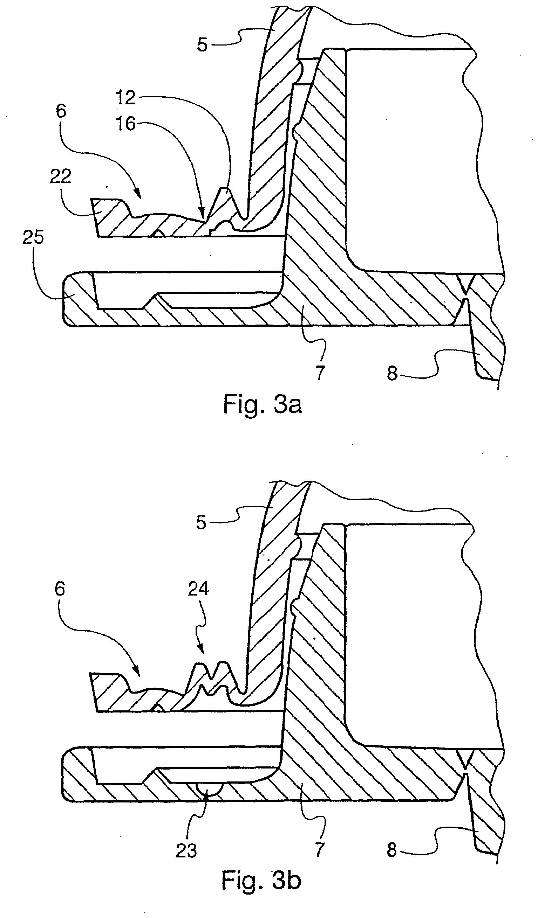

Fig. 3a and 3b refer to other possible embodiments of the present invention. In fig. 3a the sealing element 12 is provided with a groove 16 located on its outer side (the side looking away from the capsule body 3). The groove 16 is broken when the sealing element 12 is compressed by part 2A and the sealing element can rotate counterclockwise and be moved against the outlet wall 7. This embodiment, therefore, relates to a capsule wherein an area of the flange in correspondence to the sealing element 12 is spaced from the outlet wall 7 and a groove 16 is provided in that area to give a breakable line that will break if the pressure of the compression is high enough. If there no such high pressure, e.g. because the distance between part 2A and 2B is sufficient to avoid excessive compression, the sealing element 12 will 2A and 2B is sufficient to avoid excessive compression, the sealing element 12 will be compressed in a "normal" way, i.e. groove 16 will not break, so that a sealing effect is obtained just by compression.

Figure 3b shows another embodiment, in which the sealing element 24 is a double cuspid, roughly shaped as an "M", and the upper side of the outlet wall 7 is provided with a groove 23 large enough to house, if necessary, the central part of the M-shaped sealing element when this part is compressed downwards.

Fig. 9 shows another possible embodiment of the invention, wherein a sealing member 12 is spaced from the lateral wall 5 of the capsule so that when receptacle 2A of the brewing device is moved with respect to the second part 2B, or vice versa, the receptacle 2A is positioned between the lateral wall 5 of the capsule and the sealing member 12. Fig. 9 shows the capsule when already compressed between parts 2A and 2B and the sealing element 12 has been deformed. In this embodiment space 20 is mainly located under the portion of flange between sealing member 12 and lateral wall 5; when the flange is compressed the sealing element is rotated towards the lateral wall 5 and can contact receptacle 2A to improve the sealing effect.

It has to be noted that the edge 9 of the receptacle 2A of the brewing device can be brought in contact at least partially with the inner lateral surface 12A of the sealing member. According to a possible embodiment, see e.g. fig. 10, the receptacle 2A can be brought into contact both with the lateral wall 5 of the capsule and the sealing member 12, in particular with the inner lateral surface 12A of the sealing member 12.

In the embodiment according to fig. 9, in the compressed condition, the portion 14 of the flange rim 6 is moved downwards by the receptacle 2A against the outer wall 7 and the second part 2B of the brewing device. By doing so, the sealing member 12 rotates, at least partially, towards the external surface of the receptacle 2A, thus increasing the seal tight engagement between the receptacle 2A and the capsule. The embodiment shown in fig. 10 is similar to the one of fig. 9 in that there is a space provided between sealing element 12 and lateral wall 5 of the capsule, where the edge 9 of the receptacle 2A can be housed during the brewing process. In the embodiment of fig. 10, not according to the invention, the cavity 20 on the lower side of flange 6 is located in the portion of lower side going from the sealing element 12 to the end of the flange 6. Portion 14 of the lower side, between lateral wall 5 and sealing element 12 is substantially flat. The outlet wall 7' is made of a foil known in the art and the portion 2B of the brewing device is provided in a way known in the art with piercing elements 7A that will break the foil 7' during the brewing process.

As visible in fig. 10, the lower side 11 has different portions that lie on different planes, namely planes Q, P and P'; plane P' is inclined with respect to planes P and Q and crosses them. The planes meet the axis A-A at different levels.

In another embodiment, upper side 10 of the flange rim 6 is provided with a flat surface shown by dotted line L; in this embodiment, as in the embodiment of fig. 9, the sealing is obtained by the action of pressing receptacle 2A on the side of sealing element 12, preferably also on the side of lateral wall 5. Thus, it is not necessary that the sealing element is in the form of a triangle or ridge protruding from the flange rim 6: as mentioned, the upper side of flange 6 can be flat (as per line L) and the sealing element can be in the form of an increase in the thickness of the flange.

In this embodiment, the presence of the cavity or space 20 will allow a deformation of the sealing element 12 towards the end of the flange, if necessary, when compressed by the receptacle 2A, especially when the compression is lateral. In other words, when the receptacle compresses the sealing element the space 20 is suitable to "receive" the part of flange 6 that is pushed against part 2B of the brewing device; in particular when the compression path of receptacle 2A is greater than the standard compression path for which the sealing element is designed, space 20 can accommodate, i.e. receive, a deformed portion of the capsule flange so as to compensate the excess of compression on the sealing element 12 .

A similar effect occurs also in the embodiment, not according to the invention, of fig. 11, where the space 20 on the lower side of the flange is provided in portion 13 of the flange. Figures 10 and 11 also show an embodiment of the flange, that is not limited to the embodiments of said figures 10 and 11, wherein the edge of the flange is provided with a ridge 22A that extends downwards with respect to the flange. The embodiments shown are provided with a wall 7 that is formed by a lid (see e.g. fig.1) that is provided with an opening comprising self-piercing elements 8. In the shown embodiment, the capsule is provided with one central outlet means 8, but this single means can be replaced with a plurality of self-perforating elements 8 on the lower wall 7. The lid having said self piercing elements (independently on their number and shape) is preferably provided internally with ribs, if made from injected thermoplastic, or corrugated thermo-formed plastic, to make the lid more rigid and help the self-perforation of the lid. The self-perforating elements 8 comprise a portion protruding at least in part from the lower surface 7b of outlet wall 7, that are breakable under the action of the mechanical force exerted by the brewing device and/or the force exerted by the water fed into the capsule. In particular, as shown in the enlarged view of figure 4 and 5, elements 8 are defined by a portion of reduced thickness 17 of lower wall that can be broken when the part of element 8 that protrudes from outlet wall 7, is pressed against part 2B of the brewing device. Different designs for the reduced thickness area can be used, to achieve varying degree of ease of breaking, depending on the desired quality and type of beverage. For instance the reduced thickness can be extended horizontally into a plane on either or both sides of the breakable area. Preferably a hinge ensures that ribs can oscillate and open without completely breaking away from wall 7, although embodiments using wholly breakable portions are also envisageable.

This type of self-perforating elements is described in detail in the patent application WO2007/063411, in the name of the Applicant.

Another type of outlet means has a corresponding plurality of protruding elements 8, but the groove at the periphery of the rib is replaced by a very thin cut, where wall 7 is not present, i.e. with a pre-cut area, a hinge portion being still present; additionally, in this exemplary embodiment the ribs can protrude both outwardly and inwardly with respect to wall 7 .

It has to be noted that the above mentioned outlet elements can be opened, or its pre-cut openings widened to provide the desired free passage, under the action of the mechanical force, or by means of the brewing liquid pressure, or as a result of the combined action of the brewing liquid pressure with the mechanical force exerted by the brewing device.

## Claims

1. A capsule (1) for preparing a beverage in a brewing device, comprising a hollow body (3) including an inlet wall (4), an outlet wall (7) closing said capsule body, a lateral wall (5) and a flange rim (6), said rim having an upper side (10) and a lower side (11), whereby the lateral wall (5) extends between the inlet wall (4) and the flange rim (6), and whereby the upper side (10) of the flange rim (6) is closer to the inlet wall (4) than the lower side (11) of the flange rim (6), wherein said lower side (11) of the flange rim (6) comprises at least two portions (13, 14) that lie on two or more planes (Q, P, P') that are at different levels with respect to the capsule axis (A-A), and said outlet wall (7) extends along at least part of said flange rim (6) to provide a lid having at least one layer of material under the said flange rim, wherein the lower side of the flange rim is free of perforating means,
said capsule being **characterized in that**:
a sealing element (12) is located on the upper side of said flange rim and formed by at least one protruding element that is circumferential to the capsule body (3), said flange rim of the capsule body is vertically spaced from the layer formed by the lid at least in the area where the sealing element (12) is located, said different levels provide at least one space (20) or cavity (20) on the lower side of the flange rim to receive a portion of the flange rim (6) when said sealing element (12) on said flange rim is compressed, and said space or cavity is connected to the inside of the capsule.

2. A capsule according to claim 1, wherein said space (20) or cavity (20) is located, on said lower side, at a position that is opposite to said sealing element and/or adjacent to it.

3. A capsule according to any claim 1 or 2, wherein at least one (P') of said planes crosses at least one of said other planes (Q, P).

4. A capsule according to any claim 1 to 3, wherein said lid is selected from a plastic lid and a foil element.

5. A capsule according to any claim 1 to 4, wherein said sealing element (12) is spaced from said lateral wall (5) of the capsule.

6. A capsule according to any previous claim, wherein said lower side (11) of the flange rim (6) has a first portion (13) extending from said sealing element (12) towards said outer edge of the flange and including a first plane (Q), and a second portion (14) that includes at least part of said sealing element and that extends to the lateral wall (5) of the capsule body and that includes a second plane (P), the second plane (P) of said second portion (14) being closer to the inlet wall (4) of the capsule than the first plane (Q) of said first portion (13) of the flange to provide said space.

7. A capsule according to any claim 1 to 4, wherein said lower side (11) of the flange rim (6) has a first portion (13) extending from said sealing element (12) towards said outer edge of the flange and a second portion (14) that includes at least part of said sealing element and that extends to the wall (5) of the capsule body, wherein said at least one space or cavity (20) is located at said first portion (13), optionally including part of the flange opposite to said sealing element (12).

8. A capsule according to any previous claim, wherein said sealing element (12) has a cross-section that is in the shape of a truncated triangle, the sides of said triangle extending from said flange rim (6).

9. A capsule according to any previous claim wherein said sealing element (12) comprises a portion having a substantially triangular cross-section with two sides lying on two straight lines that extend from said upper surface of the flange rim (6) and define a top angle (α) of said triangle that is within the range 35° - 120.

10. A capsule according to any previous claim, wherein said flange has a peripheral portion (22A) that is directed downwards.

11. A beverage preparation system, comprising a capsule (1) according to any claim 1 to 10, wherein a brewing device includes a first part with a receptacle (2A) for housing at least part of said capsule and a second part (2B) that cooperates with said first part in the brewing of the beverage from said capsule, said first and/or second part being mobile, wherein said receptacle (2A) has a lower edge (9) that enters into contact with said sealing element (12) to compress it against said second part (2B) for providing a seal tight engagement with the capsule during a beverage preparation process, wherein said at least one space (20) or cavity is suitable to receive at least part of said flange rim (6) that is compressed against said second part (2B) of the brewing device by said first part (2A).

12. A process of preparing a beverage from a capsule according to any claim 1 to 10 in a beverage preparation system according to claim 11, said brewing device comprising a first part (2A) and a second part (2B) mobile with respect to each other, wherein said sealing element is compressed by said first part and is moved towards said second part together with a portion of the flange rim of the capsule wherein said at least one space (20) or cavity receives at least part of said flange rim (6) that is compressed against said second part (2B) of the brewing device by said first part (2A).

13. A process according to claim 12, wherein a brewing fluid is fed to the inside of the capsule and said brewing fluid reaches an area below the sealing element and/or the flange rim of the capsule to at least in part counteract the mechanical pressure of said first part.

## Patentansprüche

1. Kapsel (1) zur Herstellung eines Getränks in einer Brühvorrichtung, aufweisend einen Hohlkörper (3) mit einer Einlasswand (4), einer Auslasswand (7), die den Kapselkörper schließt, einer Seitenwand (5) und einem Flanschrand (6), wobei der Rand eine Oberseite (10) und eine Unterseite (11) aufweist, wobei sich die Seitenwand (5) zwischen der Einlasswand (4) und dem Flanschrand (6) erstreckt und wobei die Oberseite (10) des Flanschrandes (6) näher zur Einlasswand (4) als die Unterseite (11) des Flanschrandes (6) ist, wobei die Unterseite (11) des Flanschrandes (6) mindestens zwei Abschnitte (13, 14) umfasst, die auf zwei oder mehr Ebenen (Q, P, P') liegen, die sich in Bezug auf die Kapselachse (A-A) auf unterschiedlichen Ebenen befinden, und die Außenwand (7) sich entlang mindestens eines Teils des Flanschrandes (6) erstreckt, um einen Deckel bereitzustellen, der mindestens eine Materialschicht unter dem Flanschrand aufweist, wobei die Unterseite des Flanschrandes frei von Perforationsmitteln ist,
wobei die Kapsel **dadurch gekennzeichnet ist, dass**
ein Dichtungselement (12) auf der Oberseite des Flanschrandes positioniert ist und durch mindestens ein Verlängerungselement gebildet ist, welches zu dem Kapselkörper (3) umläufig ist,
wobei der Flanschrand des Kapselkörpers vertikal von der Schicht beabstandet ist, die durch den Deckel zumindest in dem Bereich, wo das Dichtungselement (12) lokalisiert ist, gebildet ist, wobei die unterschiedlichen Ebenen mindestens einen Raum (20) oder eine Höhlung (20) auf der Unterseite des Flanschrandes bereitstellen, um einen Abschnitt des Flanschrandes (6) aufzunehmen, wenn das Dickungselement (12) auf dem Flanschrand zusammengedrückt ist, und wobei der Raum oder die Höhlung mit dem Inneren der Kapsel verbunden ist.

2. Kapsel nach Anspruch 1, wobei sich der Raum (20) oder die Höhlung (20) auf der Unterseite an einer Position befindet, die dem Dichtungselement gegenüberliegt und/oder diesem benachbart ist.

3. Kapsel nach einem der Ansprüche 1 oder 2, wobei mindestens eine (P') der Ebenen mindestens eine der anderen Ebenen (Q, P) kreuzt.

4. Kapsel gemäß einem der Ansprüche 1 bis 3, wobei der Deckel aus einem Kunststoffdeckel oder einem Folienelement ausgewählt ist.

5. Kapsel gemäß einem der Ansprüche 1 bis 4, wobei das Dichtungselement (12) von der Seitenwand (5) der Kapsel beabstandet ist.

6. Kapsel nach einem der vorherigen Ansprüche, wobei die Unterseite (11) des Flanschrandes (6) einen ersten Abschnitt (13) aufweist, der sich von dem Dichtungselement (12) in Richtung der Außenkante des Flansches erstreckt und eine erste Ebene (Q) aufweist, und einen zweiten Abschnitt (14) aufweist, der mindestens einen Teil des Dichtungselements aufweist und sich bis zur Seitenwand (5) des Kapselkörpers erstreckt und eine zweite Ebene (P) aufweist, wobei die zweite Ebene (P) des zweiten Abschnitts (14) näher an der Einlasswand (4) der Kapsel liegt als die erste Ebene (Q) des ersten Abschnitts (13) des Flansches, um den Raum bereitzustellen.

7. Kapsel nach einem der Ansprüche 1 bis 4, wobei die Unterseite (11) des Flanschrandes (6) einen ersten Abschnitt (13) aufweist, der sich von dem Dichtungselement (12) in Richtung der Außenkante des Flansches erstreckt, und einen zweiten Abschnitt (14) aufweist, der mindestens einen Teil des Dichtungselements enthält und sich bis zur Wand (5) des Kapselkörpers erstreckt, wobei sich der mindestens eine Raum oder Höhlung (20) an dem ersten Abschnitt (13) befindet, gegebenenfalls einschließlich eines Teils des Flansches gegenüber dem Dichtungselement (12).

8. Kapsel nach einem der vorherigen Ansprüche, wobei das Dichtungselement (12) einen Querschnitt aufweist, der die Form eines abgeschnittenen Dreiecks hat, wobei sich die Seiten des Dreiecks von dem Flanschrand (6) erstrecken.

9. Kapsel nach einem der vorherigen Ansprüche, wobei das Dichtungselement (12) einen Abschnitt mit einem im wesentlichen dreieckigen Querschnitt mit zwei Seiten umfasst, die auf zwei geraden Linien liegen, die sich von der oberen Oberfläche des Flanschrandes (6) erstrecken und einen oberen Winkel (α) des Dreiecks definieren, der im Bereich von 35° bis 120° liegt.

10. Kapsel nach einem der vorherigen Ansprüche, wobei der Flansch einen Umfangsabschnitt (22A) aufweist, der nach unten gerichtet ist.

11. Getränkezubereitungssystem, umfassend eine Kapsel (1) nach einem der Ansprüche 1 bis 10, wobei eine Brühvorrichtung einen ersten Teil mit einem Behälter (2A) zum Unterbringen mindestens eines Teils der Kapsel und einen zweiten Teil (2B) aufweist, der mit dem ersten Teil beim Brauen des Getränks aus der Kapsel zusammenarbeitet, wobei der erste und/oder der zweite Teil beweglich ist, wobei der Behälter (2A) eine Unterkante (9) aufweist, die mit dem Dichtungselement (12) in Kontakt kommt, um es gegen den zweiten Teil (2B) zusammenzudrücken, um einen dichtenden Eingriff mit der Kapsel während eines Getränkherstellungsverfahren bereitzustellen, wobei der mindestens eine Raum (20) oder die Höhlung geeignet ist, mindestens einen Teil des Flanschrandes (6) aufzunehmen, der durch den ersten Teil (2A) gegen den zweiten Teil (2B) der Brühvorrichtung zusammengedrückt wird.

12. Verfahren zum Herstellen eines Getränks aus einer Kapsel nach einem der Ansprüche 1 bis 10 in einem Getränkherstellungsverfahren nach Anspruch 11, wobei die Brühvorrichtung einen ersten Teil (2A) und einen zweiten Teil (2B) aufweist, die in Bezug aufeinander mobil sind, wobei das Dichtungselement durch den ersten Teil zusammengedrückt wird und in Richtung des zweiten Teils bewegt wird zusammen mit einem Abschnitt des Flanschrandes der Kapsel, wobei der mindestens eine Raum (20) oder die Höhlung mindestens einen Teil des Flanschrandes (6) aufnimmt, der durch den ersten Teil (2A) gegen den zweiten Teil (2B) der Brühvorrichtung zusammengedrückt wird.

13. Verfahren nach Anspruch 12, wobei eine Brühflüssigkeit dem Inneren der Kapsel zugeführt wird und die Brühflüssigkeit einen Bereich unterhalb des Dichtungselements und/oder des Flanschrandes der Kapsel erreicht, um dem mechanischen Druck des ersten Teils zumindest teilweise entgegenzuwirken.

## Revendications

1. Capsule (1) pour la confection d'une boisson dans un dispositif de préparation de boisson, comprenant un corps creux (3) incluant une paroi d'entrée (4), une paroi de sortie (7) fermant ledit corps de capsule, une paroi latérale (5) et un rebord (6), ledit rebord présentant un côté supérieur (10) et un côté inférieur (11), de sorte que la paroi latérale (5) s'étend entre la paroi d'entrée (4) et le rebord (6), et de sorte que le côté supérieur (10) du rebord (6) est plus proche de la paroi d'entrée (4) que le côté inférieur (11) du rebord (6), dans laquelle
ledit côté inférieur (11) du rebord (6) comprend au moins deux portions (13, 14) qui reposent sur deux ou plusieurs plans (Q, P, P') qui sont à des niveaux différents par rapport à l'axe de capsule (A-A), et ladite paroi de sortie (7) s'étend le long d'au moins une partie dudit rebord (6) pour définir un couvercle présentant au moins une couche de matière sous ledit rebord, dans laquelle le côté inférieur du rebord est exempt de moyen de perforation, ladite capsule étant **caractérisée en ce que** :
un élément d'étanchéité (12) est situé sur le côté supérieur dudit rebord et est formé par au moins un élément saillant qui est circonférentiel au corps de capsule (3),
ledit rebord du corps de capsule est verticalement espacé de la couche formée par le couvercle au moins dans la zone où l'élément d'étanchéité (12) est situé, lesdits différents niveaux définissent au moins un espace (20) ou une cavité (20) sur le côté inférieur du rebord pour recevoir une portion du rebord (6) quand ledit élément d'étanchéité (12) sur ledit rebord est comprimé, et ledit espace ou ladite cavité est relié(e) à l'intérieur de la capsule.

2. Capsule selon la revendication 1, dans laquelle ledit espace (20) ou ladite cavité (20) est situé(e), sur ledit côté inférieur, à une position qui est en face dudit élément d'étanchéité et/ou adjacente à ce dernier.

3. Capsule selon une quelconque revendication 1 ou 2, dans laquelle au moins un (P') desdits plans croise au moins un desdits autres plans (Q, P).

4. Capsule selon une quelconque revendication 1 à 3, dans laquelle ledit couvercle est sélectionné entre un couvercle en plastique et un élément formant feuille.

5. Capsule selon une quelconque revendication 1 à 4, dans laquelle ledit élément d'étanchéité (12) est espacé de ladite paroi latérale (5) de la capsule.

6. Capsule selon une quelconque revendication précédente, dans laquelle ledit côté inférieur (11) du rebord (6) présente une première portion (13) s'étendant à partir dudit élément d'étanchéité (12) vers ledit bord extérieur du rebord et incluant un premier plan (Q), et une seconde portion (14) qui inclut au moins une partie dudit élément d'étanchéité et qui s'étend jusqu'à la paroi latérale (5) du corps de capsule et qui inclut un second plan (P), le second plan (P) de ladite seconde portion (14) étant plus proche de la paroi d'entrée (4) de la capsule que le premier plan (Q) de ladite première portion (13) du rebord pour définir ledit espace.

7. Capsule selon une quelconque revendication 1 à 4, dans laquelle ledit côté inférieur (11) du rebord (6) présente une première portion (13) s'étendant à partir dudit élément d'étanchéité (12) vers ledit bord extérieur du rebord et une seconde portion (14) qui inclut au moins une partie dudit élément d'étanchéité et qui s'étend jusqu'à la paroi (5) du corps de capsule, dans laquelle ledit au moins un espace ou ladite au moins une cavité (20) est situé(e) au niveau de ladite première portion (13), incluant de manière facultative une partie du rebord en face dudit élément d'étanchéité (12).

8. Capsule selon une quelconque revendication précédente, dans laquelle ledit élément d'étanchéité (12) présente une section transversale qui est en forme d'un triangle tronqué, les côtés dudit triangle s'étendant à partir dudit rebord (6).

9. Capsule selon une quelconque revendication précédente, dans laquelle ledit élément d'étanchéité (12) comprend une portion présentant une section transversale sensiblement triangulaire avec deux côtés reposant sur deux lignes droites qui s'étendent à partir de ladite surface supérieure du rebord (6) et qui définissent un angle supérieur (a) dudit triangle qui est à l'intérieur de la plage de 35° à 120.

10. Capsule selon une quelconque revendication précédente, dans laquelle ledit rebord présente une portion périphérique (22A) qui est dirigée vers le bas.

11. Système de confection de boisson, comprenant une capsule (1) selon une quelconque revendication 1 à 10, dans lequel
un dispositif de préparation de boisson inclut une première partie avec un réceptacle (2A) pour loger au moins une partie de ladite capsule et une seconde partie (2B) qui coopère avec ladite première partie dans la préparation de la boisson à partir de ladite capsule, ladite première et/ou seconde partie étant mobile(s), dans lequel ledit réceptacle (2A) présente un bord inférieur (9) qui entre en contact avec ledit élément d'étanchéité (12) pour le comprimer contre ladite seconde partie (2B) pour définir une mise en prise étanche avec la capsule pendant un processus de confection de boisson, dans lequel ledit au moins un espace (20) ou ladite au moins une cavité est approprié(e) pour recevoir au moins une partie dudit rebord (6) qui est comprimée contre ladite seconde partie (2B) du dispositif de préparation de boisson par ladite première partie (2A).

12. Processus de confection d'une boisson à partir d'une capsule selon une quelconque revendication 1 à 10 dans un système de confection de boisson selon la revendication 11,
ledit dispositif de préparation de boisson comprenant une première partie (2A) et une seconde partie (2B) mobiles l'une par rapport à l'autre,
dans lequel ledit élément d'étanchéité est comprimé par ladite première partie et est déplacé vers ladite seconde partie en même temps qu'une portion du rebord de la capsule dans lequel ledit au moins un espace (20) ou ladite au moins une cavité reçoit au moins une partie dudit rebord (6) qui est comprimée contre ladite seconde partie (2B) du dispositif de préparation de boisson par ladite première partie (2A).

13. Processus selon la revendication 12,
dans lequel un fluide de préparation de boisson est amené à l'intérieur de la capsule et ledit fluide de préparation de boisson atteint une zone au-dessous de l'élément d'étanchéité et/ou du rebord de la capsule pour neutraliser au moins en partie la pression mécanique de ladite première partie.
